(19) **Europäisches Patentamt / European Patent Office / Office européen des brevets**

(11) **EP 1 588 512 B1**

(12) **EUROPÄISCHE PATENTSCHRIFT**

(45) Veröffentlichungstag und Bekanntmachung des Hinweises auf die Patenterteilung:
**18.04.2007 Patentblatt 2007/16**

(21) Anmeldenummer: **04703870.8**

(22) Anmeldetag: **21.01.2004**

(51) Int Cl.:
**H04J 14/02** *(2006.01)*

(86) Internationale Anmeldenummer:
**PCT/IB2004/000711**

(87) Internationale Veröffentlichungsnummer:
**WO 2004/068268 (12.08.2004 Gazette 2004/33)**

(54) **SENDER UND VERFAHREN ZUR NACHRICHTEN BERTRAGUNG AUF EINER OPTISCHEN FASER**

TRANSMITTER AND METHOD FOR TRANSMITTING MESSAGES ON AN OPTICAL FIBER

EMETTEUR ET PROCEDE DE TRANSMISSION DE MESSAGES SUR UNE FIBRE OPTIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **28.01.2003 DE 10303313**

(43) Veröffentlichungstag der Anmeldung:
**26.10.2005 Patentblatt 2005/43**

(73) Patentinhaber: **Ericsson AB Stockholm (SE)**

(72) Erfinder: **FURST, Cornelius 71549 Auenwald (DE)**

(74) Vertreter: **Stasiewski, Piotr Grzegorz et al Ericsson Limited Intellectual Property Group Maplewood Chineham Business Park Basingstoke Hampshire RG24 8YB (GB)**

(56) Entgegenhaltungen:
**EP-A- 1 164 737      EP-A- 1 213 865
US-A1- 2002 181 061      US-B1- 6 275 313
US-B1- 6 324 318**

## Beschreibung

Die vorliegende Erfindung betrifft einen Sender und ein Verfahren für die Übertragung von Nachrichten auf einer optischen Faser unter Verwendung von mehreren Trägerfrequenzen.

Auf einer optischen Faser übertragene Nachrichtensignale unterliegen einer Dämpfung, die es bei langen Übertragungsentfernungen erforderlich macht, die Signale in regelmäßigen Abständen nachzuverstärken, um zu gewährleisten, dass sie einen Empfänger mit einer ausreichenden Leistung erreichen. In einem solchen Verstärker werden alle auf der Faser übertragenen Trägerfrequenzen gleichzeitig verstärkt. Hierfür ist es erforderlich, dass der Gain des Verstärkers für alle verwendeten Trägerfrequenzen möglichst exakt derselbe ist, so dass auch nach mehrmaliger Verstärkung das Verhältnis der Leistungen der verschiedenen Trägerwellen zueinander sich nicht wesentlich verschiebt. So lange die Leistungen der Trägerwellen konstant sind, ist dieses Problem durch geeignete Wahl des Frequenzbandes der Trägerwellen und des Typs des Verstärkers lösbar. Probleme ergeben sich jedoch, wenn die Leistung der einzelnen Trägerwellen abrupt variiert. Wenn auf einer einzelnen Faser eines verzweigten optischen Nachrichtennetzes eine oder mehrere Trägerfrequenzen plötzlich wegfallen, zum Beispiel aufgrund einer automatischen Schutzfunktion oder aufgrund einer technischen Störung an einer anderen Stelle des Netzwerkes, so führt dies zu einer Erhöhung der Verstärkung für die übriggebliebenen Trägerwellen. Diese Erhöhung potenziert sich, wenn die optische Faser mehrere Verstärker enthält. Extrem schnelle, starke Intensitätssprünge können die Folge sein, die zu Störungen bei der Auswertung der von den betroffenen Trägerwellen beförderten Nachrichtensignale am Empfänger führen können. Im schlimmsten Fall können diese Störungen dazu führen, dass eine automatische Schutzfunktion greift und die betreffenden Trägerwellen abschaltet. Auf diese Weise pflanzt sich die Störung in andere Bereiche des Netzwerks fort, und ein katastrophaler Zusammenbruch kann die Folge sein.

Um diesem Problem zu begegnen, ist zum Beispiel in US 5 907 420 und US 6 275 313 vorgeschlagen worden, auf einer optischen Faser zusammen mit einer Mehrzahl von Nachrichten-Trägerkanälen mit unterschiedlichen Trägerfrequenzen eine Mehrzahl von Füllkanälen zu übertragen, die im Allgemeinen nicht zur Nachrichtenübertragung genutzt werden, sondern im Wesentlichen dazu dienen, Leistungsschwankungen zu puffern, die sich aus dem Ein- und Ausschalten einzelner Nachrichten-Trägerkanäle ergeben. Das heißt, wenn ein Nachrichten-Trägerkanal ausfällt, so wird dies erkannt, und die optische Leistung der Füllkanäle wird so nachgeregelt, dass die optische Gesamtleistung von Nachrichten-Trägerkanälen und Füllkanälen konstant bleibt. Abrupte Änderungen der Verstärkung der Nachrichten-Trägerkanäle werden so vermieden.

US 5 907 420 empfiehlt, die Wellenlängen der Füllkanäle außerhalb des für die Nachrichten-Trägerkanäle verwendeten Frequenzbandes zu wählen, um so dessen Übertragungskapazität uneingeschränkt zu erhalten.

US-6 275 313 zieht auch die Möglichkeit in Betracht, mehrere Füllkanäle mit unterschiedlichen Frequenzen zu nutzen, und diese Frequenzen innerhalb des Bandes der Nachrichten-Trägerkanäle anzusiedeln.

Ein mit der Verwendung der Füllkanäle verknüpftes Problem, das auch bereits in US 6 275 313 angesprochen wird, ist die so genannte Raman-Verkippung. Optische Fasern in Nachrichtennetzen werden im Allgemeinen mit hohen optischen Leistungen betrieben, um den Abstand zwischen zwei Verstärkern möglichst groß machen zu können. Eine obere Grenze der optischen Leistung, die auf einer Faser befördert werden kann, ist gegeben durch das Einsetzen nicht-linearer optischer Effekte, die das Spektrum und die Impulsform der darauf übertragenen optischen Signale verfälschen. Einer dieser Effekte ist die stimulierte Raman-Streuung, die als eine elastische Streuung des Lichtes an Gitterschwingungen des Fasermaterials aufgefasst werden kann. Überwiegend bewirkt dieser Effekt eine spektrale Verschiebung der optischen Signale zu niedrigeren Frequenzen hin, so dass im Laufe der Ausbreitung eines aus einer Mehrzahl von Trägerfrequenzen zusammengesetzten Multiplex in einer optischen Faser die hochfrequenten Anteile des Multiplex Energie verlieren und die niederfrequenten Energie gewinnen. Diese Verschiebung der Energien wird nicht ausgeglichen, wenn der Multiplex einen in die Faser eingefügten Verstärker durchläuft, so dass am Ende der Faser das Signal-Rausch-Verhältnis der hohen Trägerfrequenzen durch Ramanstreuung aus den hohen Frequenzen beeinträchtigt ist. Unter stationären Bedingungen kann dieser Tatsache durch eine geeignete Verarbeitung der Nachrichten-Trägerkanäle am Empfänger Rechnung getragen werden. Wenn es jedoch zu einem Ausfall einzelner Nachrichten-Trägerkanäle kommt und deren Leistung durch den Füllkanal ersetzt wird, so ändert sich abrupt das Signal-Rausch-Verhältnis der einzelnen Nachrichten-Trägerkanäle, und Empfangsstörungen sind die Folge.

Aufgabe der vorliegenden Erfindung ist, solche aus Sprüngen des Signal-Rausch-Verhältnisses resultierende Störungen zu minimieren. Zu diesem Zweck ist es erforderlich, die Änderungen der Raman-Verkippung zu minimieren, die sich aus dem Wegfall oder dem Hinzuschalten von Nachrichten-Trägerkanälen auf der optischen Faser und der jeweils entsprechenden Anpassung der Leistung der Füllkanäle ergeben. Zu diesem Zweck wird vorgeschlagen, eine Mehrzahl von Füllkanälen zu verwenden und eine Änderung der optischen Leistung der Füllkanäle, die durch eine Änderung der Leistung der Nachrichten-Trägerkanäle erforderlich wird, so auf die einzelnen Füllkanäle aufzuteilen, dass eine minimale Verschiebung des Schwerpunktes des gemeinsamen Spektrums von Nachrichten-Trägerkanälen und Füllkanälen resultiert.

Ein solcher spektraler Schwerpunkt kann zum Beispiel definiert sein als eine leistungsgewichtet gemittelte Frequenz $\bar{f} = \sum_n p_n f_n / P$, wobei der Index n sich über alle Trägerkanäle und Füllkanäle erstreckt, $p_n$ die optische Leistung und $f_n$ die Frequenz des Kanals n angibt und $P = \sum_n P_n$ die gesamte optische Leistung der Nachrichten-Trägerkanäle und der Füllkanäle bezeichnet. Völlig äquivalent kann der Schwerpunkt auch wellenlängenbezogen nach der Formel

$$\bar{\lambda} = \sum_n P_n \lambda_n / P$$

berechnet werden, wobei $\lambda_n$ jeweils die Wellenlänge des Kanals n bezeichnet.

Einer ersten Ausgestaltung zufolge können die Frequenzen der Füllkanäle außerhalb eines für die Nachrichten-Trägerkanäle verwendeten Frequenzbandes gewählt werden. Dies hat den Vorteil, dass die Übertragungskapazität des Frequenzbandes durch die Einführung der Füllkanäle nicht beeinträchtigt wird. Nachteilig ist jedoch, dass die in einer optischen Langstreckenverbindung verwendeten Verstärker außerhalb eines solchen Trägerfrequenzbandes im Allgemeinen eine geringere Verstärkung aufweisen als innerhalb des Frequenzbandes, und dass dies bei der Steuerung der Energie der Füllkanäle berücksichtigt werden muss.

Von der Realisierung her ist es daher wesentlich einfacher, für einen Füllkanal eine Frequenz innerhalb des Trägerfrequenzbandes zu verwenden, so dass für die Füllkanäle die gleichen Verstärkungswerte gelten wie für die Nachrichten-Trägerkanäle. Vorzugsweise setzt sich in diesem Falle das gemeinsame Spektrum von Nachrichten-Trägerkanälen und Füllkanälen aus gleichmäßig beabstandeten Linien zusammen, die entweder zu einem Nachrichten-Trägerkanal oder einem Füllkanal gehören; das heißt, Füllkanäle werden in Lükken eines ansonsten gleichmäßig mit Nachrichten-Trägerfrequenzen bestückten Frequenzbandes eingefügt. Es können aber auch nur einzelne Linien aus einem Spektrum von gleichmäßig beabstandeten Linien als Nachrichtenträger- bzw. Füllkanäle ausgewählt werden.

Da die Zahl der Füllkanäle im Allgemeinen deutlich geringer als die der Nachrichten-Trägerkanäle sein wird, kann zum Kompensieren des Ausfalls mehrerer Nachrichten-Trägerkanäle eine Leistung auf einem Füllkanal erforderlich sein, die ein Vielfaches der typischen Leistung eines Nachrichten-Trägerkanals entspricht. Derart hohe Leistungen in einem engen Frequenzbereich begünstigen das Auftreten von störenden nichtlinearen Effekten wie etwa Vierwellenmischung. Um die Vierwellenmischung zu begrenzen, ist es zweckmäßig, dass auf den Füllkanälen unpolarisiertes Licht übertragen wird, das heißt, auf jedem Füllkanal können sich zwei orthogonale Polarisationszustände ausbreiten, die nicht miteinander kohärent sind und daher nur jeweils für sich allein zu nichtlinearen Prozessen beitragen können.

Um die Ausfallsicherheit der Füllkanäle zu verbessern, sind für jeden Füllkanal jeweils zwei Strahlungsquellen vorgesehen. Diese Strahlungsquellen sind vorzugsweise jeweils orthogonal polarisiert, um auf dem Füllkanal unpolarisiertes Licht zu erhalten und die damit verbundenen oben beschriebenen Vorteile zu erreichen.

Zweckmäßigerweise werden die zwei Strahlungsquellen im Normalbetrieb mit gleicher Ausgangsleistung betrieben.

Falls eine dieser Strahlungsquellen ausfällt, kann man sich darauf beschränken, lediglich die optische Gesamtleistung auf der Faser konstant zu halten und eine gewisse Schwerpunktverschiebung in Kauf zu nehmen, die mit einer Steigerung der Leistung der anderen Füllkanäle verbunden ist. Vorzugsweise ist jedoch jeder einzelnen Strahlungsquelle der Füllkanäle ein Sensor zum Erfassen des Ausfalls der Strahlungsquelle zugeordnet. Wenn mit Hilfe eines solchen Sensors der Ausfall einer einzelnen Strahlungsquelle eines Füllkanals erfasst wird, ist es möglich, die Ausgangsleistung der übrig gebliebenen Strahlungsquelle des gleichen Füllkanals zu verdoppeln, um so die optische Gesamtleistung auf der Faser konstant zu halten und gleichzeitig eine Schwerpunktsverlagerung des Spektrums zu vermeiden.

Das oben beschriebene Verfahren kann an der Gesamtheit der auf einer gegebenen optischen Faser übertragenen Nachrichtenträger und Füllkanäle durchgeführt werden oder nur an einer aus dieser Gesamtheit ausgewählten Gruppe von Kanälen.

Es kann auch zweckmäßig sein, die Gesamtheit der Kanäle in eine erste, eine zweite und evtl. weitere Gruppe von Nachrichtenträger- und Füllkanälen aufzuteilen und das oben beschriebene Verfahren an jeweils einer Gruppe von Nachrichtenträger- und Füllkanälen unabhängig von der anderen durchzuführen. Dies ist insbesondere dann vorteilhaft, wenn die Gruppen jeweils unterschiedliche Spektralbereiche abdecken.

Weitere Merkmale und Vorteile der Erfindung ergeben sich aus der nachfolgenden Beschreibung von Ausführungsbeispielen mit Bezug auf die beigefügten Figuren. Es zeigen:

Figur 1 ein Blockdiagramm eines Ausgangsabschnitts eines optischen Netzknotens gemäß einer ersten Ausgestaltung der Erfindung;

Figur 2 ein Blockdiagramm eines Ausgangsabschnitts gemäß einer zweiten Ausgestaltung der Erfindung;

Figur 3 ein schematisches Spektrum eines von dem Ausgangsabschnitt in eine optische Faser eingespeisten Wellenlängenmultiplex-Signals;

Figur 4 ein entsprechendes Wellenlängenmultiplex-Signal im Falle einer Störung oder nur teilweiser Auslastung des Ausgangsabschnitts;

Figur 5    ein schematisches Spektrum des Ausgangsabschnitts in einer erweiterten Ausbaustufe; und

Figur 6    ein weiteres Spektrum zur Erläuterung einer Abwandlung des erfindungsgemäßen Verfahrens.

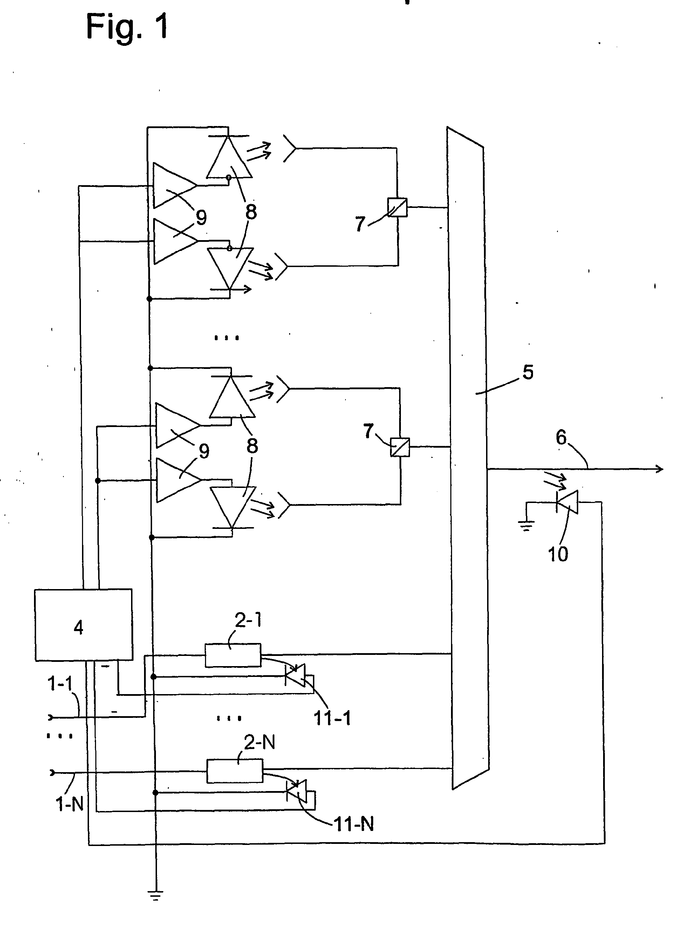

Der in Figur 1 gezeigte Ausgangsabschnitt ist Teil eines Netzknotens eines optischen Nachrichtenübertragungsnetzes, insbesondere eines Fernmeldenetzes. Ein solcher Netzknoten ist über optische Fasern mit einer Mehrzahl von anderen Netzknoten oder mit Endgeräten verbunden. Die optischen Fasern werden im Wellenlängenmultiplex betrieben, das heißt sie befördern eine Mehrzahl von Trägerwellen unterschiedlicher Frequenz, die jeweils unabhängig voneinander mit Nachrichtensignalen moduliert sind. Diese Trägerwellen werden auch als Nachrichten-Trägerkanäle bezeichnet. Der Netzknoten kann unterteilt werden in einen Eingangsabschnitt, eine Vermittlungsmatrix und einen Ausgangsabschnitt, wobei der Eingangsabschnitt einen optischen Demultiplexer umfasst, der ein auf einer optischen Faser eintreffendes Multiplexsignal in seine einzelnen Kanäle spektral zerlegt und die Nachrichten-Trägerkanäle an die optische Vermittlungsmatrix weitergibt. Die optische Vermittlungsmatrix hat eine erste Gruppe von Ausgängen, die jeweils zu dem Ausgangsabschnitt des Netzknotens führen, und eine zweite Gruppe von Ausgängen, an die optisch-elektrische Signalwandler angeschlossen sind. Die optische Vermittlungsmatrix leitet einen Nachrichten-Trägerkanal unmittelbar an einen Multiplexer des Ausgangsabschnitts weiter, wenn auf der an den Multiplexer angeschlossenen optischen Faser die Frequenz des entsprechenden Kanals verfügbar ist. Ist es nicht der Fall, so wird der Nachrichten-Trägerkanal über einen Ausgang der zweiten Gruppe an einen optisch-elektrischen Wandler weitergeleitet. Das von diesem gelieferte elektrische Nachrichtensignal wird benutzt, um einen elektrisch-optischen Wandler zu treiben, der mit einem Eingangsanschluss der Vermittlungsmatrix verbunden ist und der eine auf der Ausgangsfaser.noch verfügbare Trägerfrequenz liefert. Die Vermittlungsmatrix wiederum gibt dieses Signal weiter an den Multiplexer des Ausgangsabschnitts.

Figur 1 zeigt schematisch den Aufbau eines solchen Ausgangsabschnitts gemäß einem ersten Ausführungsbeispiel der Erfindung.

Lichtleiter 1-1 bis 1-N sind jeweils an Ausgänge der Vermittlungsmatrix angeschlossen und führen jeweils einen Nachrichten-Trägerkanal einem Koppler 2-1, ..., 2-N zu. Die Frequenzen der Nachrichten-Trägerkanäle sind sämtlich unterschiedlich. Typischerweise sind sie in einem Abstand von 100 GHz gestaffelt.

Die Koppler 2-1, ..., 2-N haben jeweils zwei Ausgänge, einen ersten, über den ein kleiner Teil der Leistung des eingespeisten Nachrichten-Trägerkanals einer Fotodiode 11-1, ..., 11-N zugeführt wird, und einen zweiten, über den ein optischer Multiplexer 5 den überwiegenden Anteil der Leistung des Nachrichten-Trägerkanals empfängt.

Zusätzlich zu seinen N mit den Kopplern 2-1, ..., 2-N verbundenen Eingängen verfügt der Wellenlängenmultiplexer 5 über zwei Eingänge, die jeweils über einen Polarisations-Strahlteiler 7 mit zwei Laserdioden 8 verbunden sind. Die zwei jeweils mit einem Strahlteiler 7 verbundenen Laserdioden 8 sind auf die gleiche Frequenz abgestimmt und orthogonal zueinander polarisiert, so dass sie unpolarisiertes Licht in den Wellenlängenmultiplexer 5 einspeisen können. Die Frequenzen der Paare von Laserdioden 8 liegen jeweils in einer Lücke der Staffelung der Frequenzen der Nachrichten-Trägerkanäle, in einem Abstand von 100 GHz von den benachbarten Nachrichten-Trägerkanälen. Die Laserdioden 8 empfangen jeweils einen nicht mit einem Nachrichtensignal modulierten Versorgungsstrom von Treibern 9, deren Ausgangspegel durch die Steuerschaltung 4 gesteuert ist. Die Ausgangsleitung der Laserdioden 8 ist vom zugeführten Versorgungsstrom abhängig und kann ein Vielfaches der Leistung eines Nachrichten-Trägerkanals erreichen.

Eine erste Fotodiode 10 ist am Anschlusspunkt der optischen Faser 6 an den Ausgang des Wellenlängenmultiplexers 5 angeordnet, um die von Letzterem gelieferte optische Gesamtleistung zu überwachen, die sich aus den Beiträgen sämtlicher Nachrichten-Trägerkanäle sowie der Laserdioden zusammensetzt. Die Fotodiode 10 ist mit einem Eingang der Steuerschaltung 4 verbunden. Anhand der Fotodiode 10 ist die Steuerschaltung 4 in der Lage, zu erkennen, ob die gesamte optische Leistung des Senders von einem Sollwert abweicht, der erforderlich ist, um eine ausgewogene Verstärkung der einzelnen Nachrichten-Trägerkanäle in entlang der optischen Faser 6 angeordneten Verstärkern zu erzielen. Anhand der Fotodioden 11-1 bis 11-N ist sie darüber hinaus in der Lage, zu erkennen, welches die Nachrichten-Trägerkanäle sind, auf deren plötzliches Aus- oder Einsetzen eine Änderung der optischen Gesamtleistung zurückzuführen ist. Anhand dieser Informationen regelt die Steuerschaltung 4 die Ausgangsleistung der Laserdioden 8.

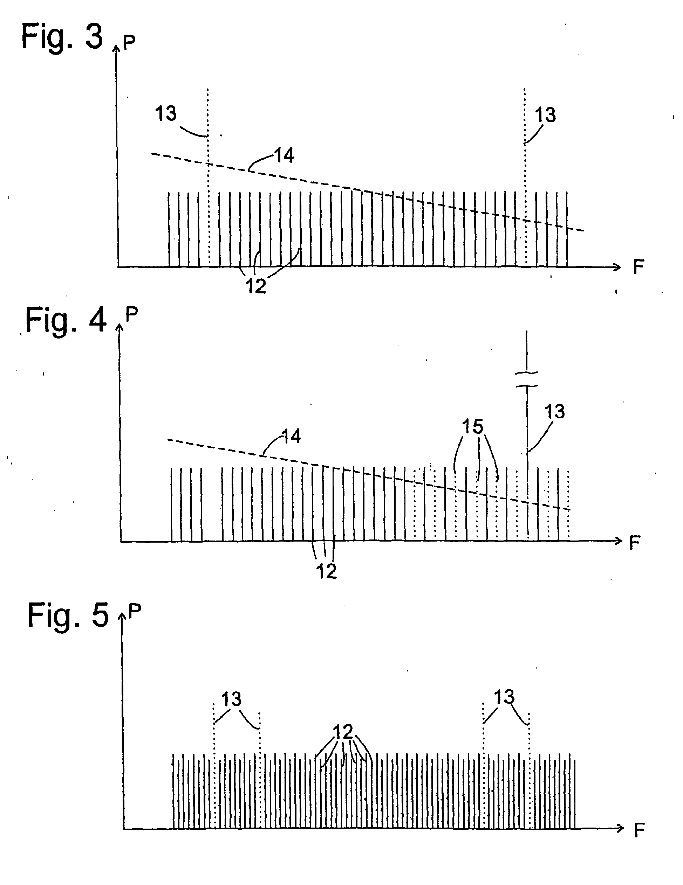

Zur Erläuterung des Steuerverfahrens wird auf die Figuren 3 und 4 Bezug genommen. Figur 3 zeigt ein typisches Spektrum eines von dem erfindungsgemäßen Sender in die optische Faser 6 eingespeisten Wellenlängenmultiplex. Es setzt sich zusammen aus N = 38 Linien 12 mit im Wesentlichen gleicher Leistung p, die jeweils den von den Laserdioden 3-1 bis 3-N eingespeisten Trägerwellen entsprechen. Im hoch- und niederfrequenten Randbereich weist das Spektrum der Trägerwellen zwei Lücken auf, an denen die Frequenzen der Füll-Laserdioden 8 angesiedelt sind. Deren Linien 13 sind in der Figur punktiert dargestellt, um zu verdeutlichen, dass ihre Leistung variabel ist und im dargestellten Fall, dass alle Träger-Laserdioden 3-1 bis 3-N aktiv sind, verschwinden kann. Die bereits eingangs angesprochene, im Laufe der Ausbreitung des Wellenlängenmultiplex auf der optischen Faser 6 auftretende Raman-Verkippung bewirkt, dass der Multiplex einen in der Faser 6 angeordneten Zwischenverstärker mit einem entsprechend der gestrichelten Linie 14 verzerrten Spektrum erreicht, bei dem die hochfrequenten Linien des Multiplex gedämpft und die niedrigfrequenten im Vergleich dazu überhöht sind.

Figur 4 zeigt ein analoges Spektrum für den Fall, dass einige der Nachrichten-Trägerkanäle, hier als punktierte Linien 15 dargestellt, ausgefallen sind. Der dadurch bedingte Verlust an Leistung im hochfrequenten Bereich des Spektrums bewirkt eine Verschiebung der Kennlinie 14 der Raman-Verkippung zu niedrigen Frequenzen hin, das heißt die Dämpfung bzw. Überhöhung der einzelnen Nachrichten-Trägerkanäle verändert sich, und es gibt Kanäle, die im vollständigen Spektrum der Figur 3 überhöht werden, und im Spektrum der Figur 4 eine Dämpfung erfahren. Um dieser Erscheinung entgegenzuwirken, verteilt beim Ausfall einer oder mehrerer Trägerkanäle die Steuerschaltung 4 die zum Konstanthalten der gesamten optischen Leistung auf der Faser 6 hinzuzufügende optische Leistung der Füll-Laserdioden 8 so auf die zwei Füllfrequenzen, dass der Schwerpunkt des Spektrums, definiert durch die

Formel $\bar{f} = \sum_{n} P_n f_n / P$, so wenig wie möglich variiert.

Bei Verwendung von nur zwei Füllfrequenzen, wie im vorliegenden Ausführungsbeispiel, ist es nicht immer möglich, diese Anforderung exakt zu erfüllen; in einem solchen Fall wählt die Steuerschaltung 4 diejenige Aufteilung der Leistung auf die Füll-Laserdioden, die die Verschiebung des Schwerpunktes $\bar{f}$ minimiert.

Im in Figur 4 gezeigten Fall, dass die ausgefallenen Trägerkanäle sämtlich im hochfrequenten Bereich des Spektrums liegen, ist es das hochfrequente Paar von Füll-Laserdioden 8, das von der Steuerschaltung 4 angesteuert wird, um die Leistung der ausgefallenen Trägerkanäle zu ergänzen.

Auf diese Weise steht im hochfrequenten Bereich des Multiplexspektrums wieder ausreichend Energie zur Verfügung, um die Verschiebung der Kennlinie 14 der Raman-Verkippung aufzuheben.

Bei der obigen Schilderung ist davon ausgegangen worden, dass am Ausgang des Multiplexers 5 die Leistungen aller Nachrichten-Trägerkanäle gleich sind. Um den Auswirkungen der Raman-Verkippung zu begegnen, ist es selbstverständlich auch möglich, die Leistung der höherfrequenten unter diesen Trägerkanälen am Ausgang des Multiplexers 5 mit Hilfe von jeweils den Eingängen des Multiplexers 5 vorgeschalteten Verstärkern oder Abschwächern höher zu machen als die der niederfrequenten, um so zu erreichen, dass die Trägerkanäle an einem Verstärker der optischen Faser 6 mit gleichen Leistungen oder wenigstens mit einem schwächeren Abfall der Leistung zu höheren Frequenzen hin eintreffen. Auf diese Weise kann zwar die Signalqualität am Ausgang der Faser 6 ein Stück weit verbessert werden, die Empfindlichkeit gegen das Ein- oder Ausschalten einzelner Kanäle im Multiplex bleibt jedoch bestehen.

Die auf einem der Füllkanäle auf der optischen Faser 6 übertragene Leistung kann ein Vielfaches der Leistung auf einem der Nachrichten-Trägerkanäle sein, insbesondere wenn die Füllkanäle mit ihrer Leistung den Ausfall mehrerer Nachrichten-Trägerkanäle kompensieren müssen. Da sich die auf den Füllkanälen übertragene Leistung auf zwei orthogonale Polarisationszustände verteilt, führt dies zu keiner übermäßigen Zunahme der Vierwellenmischung und anderer störender nicht-linearer Effekte.

Wenn in einem Paar von Füll-Laserdioden 8 gleicher Frequenz eine ausfällt, so registriert die Steuerschaltung 4 dies anhand der von der Fotodiode 10 erfassten, in die Faser 6 eingespeisten optischen Gesamtleistung. Sie reagiert darauf, indem sie die Treiber 9 beider Füll-Laserdiodenpaare 8 stärker ansteuert. Diese Ansteuerung wird so lange nachgeführt, bis der Sollwert der optischen Ausgangsleistung wieder erreicht ist. Auf diese Weise erhöhen sich die Ausgangsleistungen der noch intakten Füll-Laserdioden um jeweils einen gleichen Faktor so weit, bis die gewünschte Leistung auf der Faser 6 wieder erreicht ist. Eine daraus resultierende Verschiebung des spektralen Schwerpunktes des Multiplex wird der Einfachheit der Steuerung halber in Kauf genommen. Auch falls beim Nachführen der Leistung auf den Füllkanälen einer der Treiber 9 oder eine der Laserdioden 8 die Sättigungsleistung erreicht, kann durch einfaches weiteres Verstärken der Ansteuerung erreicht werden, dass die nichtgesättigten Füll-Laserdioden 8 mehr Leistung liefern, bis die Soll-Gesamtleistung wieder erreicht ist.

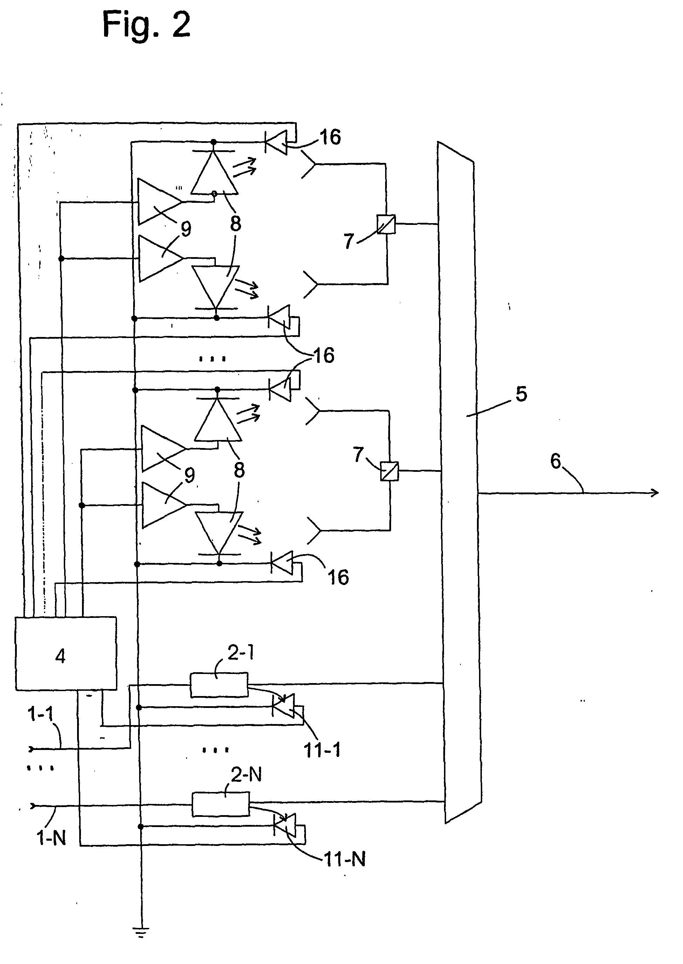

Figur 2 zeigt eine zweite Ausgestaltung des Ausgangsabschnitts eines Netzknotens der Erfindung, bei dem zusätzlich auch die Füll-Laserdioden 8 mit Fotodioden 16 zum Überwachen ihrer Ausgangsleistung ausgestattet sind. Bei dieser Ausgestaltung kann die Fotodiode 10 am Kopplungspunkt zwischen dem Wellenlängenmultiplexer 5 und der optischen Faser 6 entfallen, sofern die anderen Fotodioden 11-1, ..., 11-N, 16 exakt genug arbeiten, um der Steuerschaltung 4 ein Berechnen der Gesamtleistung auf der Faser 6 durch Addieren ihrer Messwerte zu ermöglichen. Der Vorteil dieser Ausgestaltung ist, dass beim Ausfall einer Füll-Laserdiode 8 die Steuerschaltung 4 in der Lage ist, die Identität der ausgefallenen Füll-Laserdiode 8 zu ermitteln und den damit verbundenen Verlust an Gesamtleistung zu kompensieren, indem sie die mit der ausgefallenen gepaarte Füll-Laserdiode 8 stärker ansteuert, um deren Ausgangsleistung zu verdoppeln. Auf diese Weise kann eine Verschiebung des spektralen Schwerpunktes des Multiplex vermieden werden. Erst wenn eine solche Verdopplung die Nennleistung der betreffenden Füll-Laserdiode überschreitet, setzt die Steuerschaltung 4 auch die Leistung der übrigen Füll-Laserdioden herauf.

Während beim oben betrachteten Beispiel von N = 38 Nachrichten-Trägerkanälen zwei Füllkanäle ausreichend sein können, ergibt sich bei Verwendung größerer Zahlen von Trägerfrequenzen das Problem, dass die zum Konstanthalten der optischen Gesamtleistung erforderlichen Füll-Leistungen so groß werden, dass trotz fehlender Polarisierung der Füllkanäle sich die Vierwellenmischung störend bemerkbar macht. Bei größeren Zahlen von Nachrichten-Trägerkanälen im Multiplex wird man daher zweckmäßigerweise auch entsprechend mehr Füllkanäle einsetzen. Das heißt, wenn man von einem Multiplex mit dem in Figur 3 gezeigten Spektrum zu einem 80-Kanal-Multiplex mit Kanalabständen von 50 GHz übergeht, wie im Spektrum der Figur 5 dargestellt, so wird man auch unter den zusätzlichen 40 Kanälen zwei als Füllkanäle festlegen. Das Vorhandensein einer größeren Zahl von Füllkanälen hat den Vorteil, dass die zusätzlichen Füllkanäle zur Kompensation des Ausfalls nicht nur der neuen, sondern auch der ursprünglichen Nachrichten-Trägerkanäle eingesetzt werden können. Es ergeben sich so zusätzliche Freiheitsgrade bei der Kompensation, das heißt es kann eine Mehrzahl von Verteilungen der Füllleistung auf die einzelnen Füllaser geben, die es erlauben, den Ausfall eines Nachrichten-Trägerkanals zu kompensieren, ohne dass sich der Schwerpunkt des Spektrums verlagert. Unter diesen verschiedenen Möglichkeiten kann dann z.B. diejenige bevorzugt verwendet werden, die die gleichmäßigste Verteilung der Leistung auf die Fülllaser aufweist und so Störungen aufgrund von Vierwellenmischung minimiert.

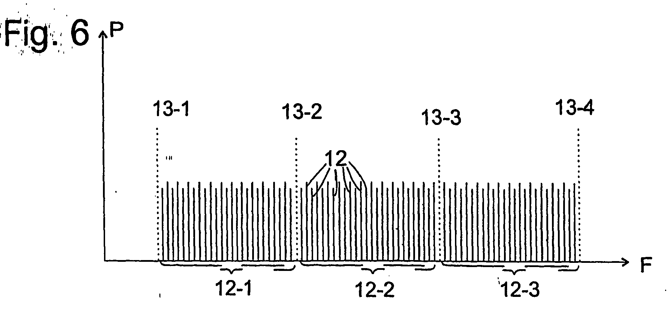

Figur 6 zeigt ein weiteres Spektrum von Nachrichten-Trägerkanälen 12 und Füllkanälen 13-1, 13-2, 13-3, 13-4 in einer optischen Faser. Die Füllkanäle unterteilen die Nachrichten-Trägerkanäle in drei Gruppen 12-1, 12-2, 12-3, die durch die Füllkanäle 13-2, 13-3 voneinander getrennte Spektralbereiche belegen. Wenn in einem der Spektralbereiche 12-1 bis 12-3 ein oder mehrere Nachrichten-Trägerkanäle ausfallen, so kann dies unter Beibehaltung der Leistung und des spektralen Schwerpunkts der betreffenden Gruppe kompensiert werden, indem die Leistung der zwei der betroffenen Gruppe unmittelbar benachbarten Füllkanäle nachgeregelt wird. Wenn auf diese Weise Ausfälle in jeder einzelnen Gruppe unabhängig von den anderen Gruppen kompensiert werden, so folgt daraus, dass auch für die Gesamtheit der auf der Faser übertragenen Kanäle Leistung und spektraler Schwerpunkt konstant bleiben. Die Leistung der jeweils zwischen zwei Gruppen von Nachrichten-Trägerkanälen liegenden Füllkanäle 13-2, 13-3 ist die Summe der Leistungen, die jeweils für die Kompensation einer der zwei angrenzenden Gruppen benötigt werden.

**Patentansprüche**

1. Verfahren zur Nachrichtenübertragung auf einer optischen Faser (6) unter Verwendung einer Gruppe von Nachrichten-Trägerkanälen (12) mit unterschiedlichen Trägerfrequenzen und einer Gruppe von Füllkanälen (13), die gemeinsam mit den Nachrichten-Trägerkanälen (12) über die Faser (6) übertragen werden, wobei die auf der Faser (6) übertragene optische Gesamtleistung der Nachrichten-Trägerkanäle und der Füllkanäle konstant gehalten wird, indem jede Änderung der Leistung der Nachrichten-Trägerkanäle durch eine entgegengesetzt gleiche Änderung der optischen Leistung der Füllkanäle kompensiert wird, **dadurch gekennzeichnet, dass** die Änderung der optischen Leistung der Füllkanäle so auf die einzelnen Füllkanäle aufgeteilt wird, dass eine minimale verschiebung des Schwerpunkts des gemeinsamen Spektrums von Nachrichten-Trägerkanälen und Füllkanälen resultiert, und dass das auf jedem Füllkanal (13) übertragene Licht von zwei Strahlungsquellen (8) erzeugt wird.

2. Verfahren nach Anspruch 1, **dadurch gekennzeichnet, dass** die Leistungen der Füllkanäle stufenlos angepasst werden.

3. Verfahren nach einem der vorhergehenden Ansprüche, **dadurch gekennzeichnet, dass** die Frequenzen der Füllkanäle außerhalb eines für die Nachrichten-Trägerkanäle verwendeten Frequenzbandes gewählt werden.

4. Verfahren nach einem der Ansprüche 1 bis 3, **dadurch gekennzeichnet, dass** die Frequenzen der Füllkanäle innerhalb eines für die Nachrichten-Trägerkanäle verwendeten Frequenzbandes gewählt werden.

5. Verfahren nach einem der vorhergehenden Ansprüche, **dadurch gekennzeichnet, dass** das gemeinsame Spektrum von Nachrichten-Trägerkanälen (12) und Füllkanälen (13) sich aus gleichmäßig beabstandeten Linien (12, 13) zusammensetzt, die entweder zu einem Nachrichten-Trägerkanal oder zu einem Füllkanal gehören.

6. Verfahren nach einem der Ansprüche 1 bis 4, **dadurch gekennzeichnet, dass** die Frequenzen der Nachrichten-Trägerkanäle (12) und der Füllkanäle (13) aus einem Spektrum von gleichmäßig beabstandeten Linien ausgewählt werden.

7. Verfahren nach einem der vorhergehenden Ansprüche, **dadurch gekennzeichnet, dass** auf den Füllkanälen (13) unpolarisiertes Licht übertragen wird.

8. Verfahren nach Anspruch 7, **dadurch gekenn-**

zeichnet, dass die zwei Strahlungsquellen (8) jeweils orthogonal polarisiertes Licht erzeugen.

9. Verfahren nach Anspruch 7 oder 8, **dadurch gekennzeichnet, dass** die zwei Serahlungsquellen (8) mit gleicher Ausgangsleistung betrieben werden.

10. Verfahren nach Anspruch 9, **dadurch gekennzeichnet, dass** bei einem Ausfall einer der zwei Strahlungsquellen (8) die andere mit verdoppelter Ausgangsleistung betrieben wird.

11. Verfahren nach einem der vorhergehenden Ansprüche, **dadurch gekennzeichnet, dass** die Füllkanäle (13) über einen Wellenlängenmultiplexer (5) in die optische Faser (6) eingekoppelt werden.

12. Verfahren zur Nachrichtenübertragung auf einer optischen Faser (6) unter Verwendung einer Gesamtheit von Nachrichten-Trägerkanälen (12) mit unterschiedlichen Trägerfrequenzen und einer Gesamtheit von Füllkanälen (13), die gemeinsam mit den Nachrichten-Trägerkanälen (12) über die Faser (6) übertragen werden, **dadurch gekennzeichnet, dass** die Gesamtheit der Nachrichten-Trägerkanäle (12) und die Gesamtheit der Füllkanäle (13) jeweils in wenigstens eine erste und eine zweite Gruppe aufgeteilt werden und dass für die ersten Gruppen das Verfahren nach einem der vorhergehenden Ansprüche durchgeführt wird.

13. Verfahren nach Anspruch 12, **dadurch gekennzeichnet, dass** auch für die zweiten Gruppen das Verfahren nach einem der Ansprüche 1 bis 11 durchgeführt wird.

14. verfahren nach Anspruch 12 oder 13, **dadurch gekennzeichnet, dass** die Nachrichtenkanäle der ersten Gruppe auf einer Seite und die der zweiten Gruppe auf der anderen Seite einer Grenzfrequenz liegen.

15. Sender für ein optisches Nachrichtenübertragungssystem, mit einer Mehrzahl von mit einem Nachrichtensignal modulierbaren Lichtquellen (3-1,..., 3-N), einer Mehrzahl von Fülllichtquellen (8), die gemeinsam mit einem Anschluss für eine optische Faser (6) verbunden sind, einem Sensor (10) zum Überwachen der an dem Anschluss bereitgestellten optischen Gesamtleistung von modulierbaren Lichtquellen (3-1, ... , 3-N) und Fülllichtquellen (8) und einer Steuerschaltung (4) zum Steuern der optischen Leistung der Fülllichtquellen (7, 8) derart, dass die optische Gesamtleistung im wesentlichen nicht variiert, **dadurch gekennzeichnet, dass** die Steuerschaltung (4) ausgelegt ist, die optische Leistung der Fülllichtquellen (7, 8) ferner derart zu steuern, dass der spektrale Schwerpunkt der optischen Gesamtleistung im wesentlichen nicht variiert und dass jede Fülllichtquelle aus zwei einzelnen Lichtquellen zusammengesetzt ist.

16. Sender nach Anspruch 15, **dadurch gekennzeichnet, dass** die Fülllichtquellen Frequenzen außerhalb eines Frequenzbandes der modulierbaren Lichtquellen aufweisen.

17. Sender nach Anspruch 15, **dadurch gekennzeichnet, dass** die Fülllichtquellen Frequenzen innerhalb eines Frequenzbandes der modulierbaren Lichtquellen aufweisen.

18. Sender nach Anspruch 17, **dadurch gekennzeichnet, dass** das Spektrum der optischen Gesamtleistung sich aus gleichmäßig beabstandeten Linien zusammensetzt, die entweder von einer modulierbaren Lichtquelle oder einer Fülllichtquelle erzeugt sind.

19. Sender nach einem der Ansprüche 15 bis 18, **dadurch gekennzeichnet, dass** die Fülllichtquellen unpolarisiertes Licht liefern.

20. Sender nach Anspruch 19, **dadurch gekennzeichnet, dass** die zwei einzelnen Lichtquellen orthogonal polarisiert sind.

21. Sender nach Anspruch 20, **dadurch gekennzeichnet, dass** jeder einzelnen Lichtquelle (8) ein Sensor (16) zum Erfassen des Ausfalls der Lichtquelle (8) zugeordnet ist.

## Claims

1. A method of transmitting messages on an optical fibre (6) using a group of information carrier channels (12) at different carrier frequencies and a group of filling channels (13), which are conveyed together with the information carrier channels (12) along the fibre (6), wherein the total optical power of the information carrier channels and the filling channels transmitted on the fibre (6) is kept constant by compensating each change of the optical power of the information carrier channels by an opposite identical change of the optical power of the filling channels, **characterised in that** the change of the optical power of the filling channels is distributed onto the individual filling channels such that a minimum displacement of the centre of gravity of the common spectrum of the information carrier channels and the filling channels results and that the light transmitted on each filling channel (13) is generated by two radiation sources (8).

2. The method according to claim 1, **characterised in**

**that** the optical powers of the filling channels are continuously adapted.

3. The method according to any one of the preceding claims, **characterised in that** the frequencies of the filling channels are selected outside of a frequency band which is used for the information carrier channels.

4. The method according to one of claims 1 to 3, **characterised in that** the frequencies of the filling channels are selected inside a frequency band which is used for the information carrier channels.

5. The method according to any one of the preceding claims, **characterised in that** the common spectrum of the information carrier channels (12) and the filling channels (13) is formed of equidistant lines (12, 13) which belong to either an information carrier channel or a filling channel.

6. The method according to one of claims 1 to 4, **characterised in that** the frequencies of the information carrier channels (12) and the filling channels (13) are selected from a spectrum of equidistant lines.

7. The method according to any one of the preceding claims, **characterised in that** unpolarised light is transmitted in the filling channels (13).

8. The method according to claim 7, **characterised in that** the two radiation sources (8) generate orthogonally polarized light.

9. The method according to claim 7 or 8, **characterised in that** the two radiation sources (8) are operated at equal output power.

10. The method according to claim 9, **characterised in that** in case of a failure of one of the two radiation sources (8), the other one is operated at doubled output power.

11. The method according to any one of the preceding claims, **characterised in that** the filling channels (13) are coupled into the optical fibre (6) by a wavelength multiplexer (5).

12. A method of transmitting messages on an optical fibre (6) using a set of information carrier channels (12) at different carrier frequencies and a set of filling channels (13), which are conveyed together with the information carrier channels (12) along the fibre (12), **characterised in that** the set of the information carrier channels (12) and the set of the filling channels (13) is divided into at least one first group and a second group, and that the method according any one of the preceding claims is carried out for the first group.

13. The method of according to claim 12, **characterised in that** the method according to any one of claims 1 to 11 is carried out for the second group.

14. The method according to claim 12 or 13, **characterised in that** the information carrier channels of the first group are located on one side, and the information carrier channels of the second group are located on the other side, of a limit frequency.

15. A transmitter for an optical information transmission system, comprising a plurality of modulatable light sources (3-1, ..., 3-N) modulated by an information signal, a plurality of filling light sources (8) connected in common to a port for an optical fibre (6), a sensor (10) for monitoring a total optical power of the modulatable light sources (3-1, ..., 3-N) and the filling light sources (8) provided at said port, and a control circuit (4) for controlling the optical power of the filling light sources (7, 8) such that the total optical power does substantially not vary, **characterised in that** the control circuit (4) is designed to control the optical power of the filling light sources (7, 8) such that the spectral centre of gravity of the total optical power does substantially not vary and that each filling light source is composed of two individual light sources.

16. The transmitter according to claim 15, **characterised in that** the filling light sources have frequencies outside a frequency band of the modulatable light sources.

17. The transmitter according to claim 15, **characterised in that** the filling light sources have frequencies inside a frequency band of the modulatable light sources.

18. The transmitter according to claim 17, **characterised in that** the spectrum of the total optical power is formed of equidistant lines which are generated either by a modulatable light source or a filling light source.

19. The transmitter according to any one of claims 15 to 18, **characterised in that** the filling light sources provide unpolarised light.

20. The transmitter according to claim 19, **characterised in that** the two individual light sources are polarized orthogonally.

21. The transmitter according to claim 20, **characterised in that** each individual light source (8) has a sensor (16) associated to it for detecting a failure of the light source (8).

**Revendications**

1. Procédé de transmission d'informations sur une fibre optique (6) en utilisant un groupe de canaux porteurs d'informations (12) ayant des fréquences porteuses différentes et un groupe de canaux de remplissage (13), qui sont transmis conjointement aux canaux porteurs d'informations (12) par l'intermédiaire de la fibre (6), moyennant quoi la puissance optique totale des canaux porteurs d'informations et des canaux de remplissage transmise sur la fibre (6) est maintenue à un niveau constant, en compensant chaque variation de la puissance des canaux porteurs d'informations par une modification similaire contraire de la puissance optique des canaux de remplissage, **caractérisé en ce que** la modification de la puissance optique des canaux de remplissage est répartie sur les canaux de remplissage individuels de telle sorte qu'un déplacement minimal du point de gravité du spectre commun des canaux porteurs d'informations et des canaux de remplissage est obtenu en résultat et **en ce que** la lumière transmise sur chaque canal de remplissage (13) est produite par deux sources de rayonnement (8).

2. Procédé selon la revendication 1, **caractérisé en ce que** les puissances des canaux de remplissage sont adaptées en continu.

3. Procédé selon une des revendications précédentes, **caractérisé en ce que** les fréquences des canaux de remplissage sont sélectionnées en dehors d'une bande de fréquence utilisée pour les canaux porteurs d'informations.

4. Procédé selon une des revendications 1 à 3, **caractérisé en ce que** les fréquences des canaux de remplissage sont sélectionnées à l'intérieur d'une bande de fréquence utilisée pour les canaux porteurs d'information.

5. Procédé selon une des revendications précédentes, **caractérisé en ce que** le spectre commun des canaux porteurs d'informations (12) et des canaux de remplissage (13) se compose de lignes (12,13) espacées régulièrement, qui appartiennent soit à un canal porteur d'informations, soit à un canal de remplissage.

6. Procédé selon une des revendications 1 à 4, **caractérisé en ce que** les fréquences de canaux porteurs d'informations (12) et des canaux de remplissage (13) sont sélectionnées dans un spectre de lignes espacées régulièrement.

7. Procédé selon une des revendications précédentes, **caractérisé en ce que** la lumière non polarisée est transmise sur les canaux de remplissage (13).

8. Procédé selon la revendication 7, **caractérisé en ce que** les deux sources de rayonnement (8) produisent respectivement une lumière polarisée orthogonalement.

9. Procédé selon la revendication 7 ou 8, **caractérisé en ce que** les deux sources de rayonnement (8) sont exploitées à une puissance de sortie similaire.

10. Procédé selon la revendication 9, **caractérisé en ce que**, lors d'une défaillance d'une des deux sources de rayonnement (8), l'autre est exploitée à une puissance de sortie doublée.

11. Procédé selon une des revendications précédentes, **caractérisé en ce que** les canaux de remplissage (13) sont couplés par l'intermédiaire d'un multiplexeur de longueur d'onde (5) dans la fibre optique (6).

12. Procédé de transmission d'informations sur une fibre optique (6) en utilisant une totalité de canaux porteurs d'informations (12) ayant des fréquences porteuses différentes et une totalité de canaux de remplissage (13), qui sont transmis conjointement aux canaux porteurs d'informations (12) par l'intermédiaire de la fibre (6), **caractérisé en ce que** la totalité des canaux de support d'informations (12) et la totalité des canaux de remplissage (13) sont respectivement répartis en au moins un premier et un deuxième groupe et **en ce que** pour les premiers groupes, le procédé selon une des revendications précédentes est mis en oeuvre.

13. Procédé selon la revendication 12, **caractérisé en ce que** également pour le deuxième groupe, le procédé selon une des revendications 1 à 11 est mis en oeuvre.

14. Procédé selon la revendication 12 ou 13, **caractérisé en ce que** les canaux d'informations du premier groupe sont présents d'un côté et les canaux d'information du deuxième groupe sont présents de l'autre côté d'une fréquence limite.

15. Emetteur pour un système de télécommunication optique, comportant une pluralité de sources lumineuses (3-1,...,3-N) modulables par un signal d'information, une pluralité de sources de lumière de remplissage (8), qui sont conjointement reliées à un raccordement d'une fibre optique (6), un capteur (10) pour surveiller la puissance totale optique des sources lumineuses modulables (3-1,...,3-N) fournies au raccordement et des sources de lumière de remplissage (8) et un circuit de commande (4) pour commander la puissance optique des sources de lumière de remplissage (7,8) de telle sorte que la puissance optique totale ne varie pas sensiblement, **caracté-**

**risé en ce que** le circuit de commande (4) est conçu de telle sorte que la puissance optique des sources de lumière de emplissage (7,8) soit en outre commandée de telle sorte que le centre de gravité spectrale de la puissance optique totale ne varie essentiellement pas et que chaque source de lumière de remplissage soit composée de deux sources lumineuses individuelles.

16. Emetteur selon la revendication 15, **caractérisé en ce que** les sources de lumière de remplissage présentent des fréquences en dehors d'une bande de fréquence des sources lumineuses modulables.

17. Emetteur selon la revendication 15, **caractérisé en ce que** les sources de lumière de remplissage présentent des fréquences à l'intérieur d'une bande de fréquence des sources lumineuses modulables.

18. Emetteur selon la revendication 17, **caractérisé en ce que** le spectre de la puissance optique totale est composé de lignes espacées régulièrement, qui sont produites soit par une source lumineuse modulable, soit par une source de lumière de remplissage.

19. Emetteur selon une des revendications 15 à 19, **caractérisé en ce que** les sources de lumière de remplissage délivrent une lumière non polarisée.

20. Emetteur selon la revendication 19, **caractérisé en ce que** les deux sources de lumière individuelles sont polarisées orthogonalement.

21. Emetteur selon la revendication 20, **caractérisé en ce que** un capteur (16) pour détecter la défaillance de la source lumineuse (8) est associé à chaque source lumineuse (8) individuelle.

# Fig. 1

# Fig. 2

Fig. 3

Fig. 4

Fig. 5

## Fig. 6